(19) Europäisches Patentamt
European Patent Office
Office européen des brevets

(11) EP 4 692 210 A1

(12) EUROPEAN PATENT APPLICATION

(43) Date of publication:
**11.02.2026 Bulletin 2026/07**

(21) Application number: **24193656.6**

(22) Date of filing: **08.08.2024**

(51) International Patent Classification (IPC):
***C08L 23/14*** *(2006.01)* ***C08F 210/06*** *(2006.01)*
***B32B 27/32*** *(2006.01)* *C08F 210/08 (2006.01)*
*C08F 210/16 (2006.01)* *C08F 4/6592 (2006.01)*

(52) Cooperative Patent Classification (CPC):
(C-Sets available)
**C08L 23/142; B32B 27/32; C08F 210/06;**
C08F 4/65908; C08F 4/65912; C08F 4/65916;
C08F 2420/07; C08L 2205/02; C08L 2205/12;
C08L 2207/02; C08L 2314/06 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **FAWAZ, Joel**
**4021 Linz (AT)**
- **WANG, Jingbo**
**4021 Linz (AT)**
- **GAHLEITNER, Markus**
**4021 Linz (AT)**
- **HARTL, Anna**
**4021 Linz (AT)**
- **NIEDERSUESS, Peter**
**4021 Linz (AT)**

(74) Representative: **Dehns**
**10 Old Bailey**
**London EC4M 7NG (GB)**

# (54) CAST FILM BASED ON POLYPROPYLENE COPOLYMER AND ELASTOMER

(57) The present invention relates to a monolayer cast film made of a polypropylene-based composition (PC) comprising a specific single site catalysed propylene-ethylene copolymer base resin (SSC23) and a specific propylene-based elastomer in predetermined amounts having improved sealing characteristics and improved optical properties.

EP 4 692 210 A1

(52) Cooperative Patent Classification (CPC): (Cont.)

C-Sets
**C08F 210/06, C08F 2/001;**
**C08F 210/06, C08F 4/65927;**
**C08F 210/06, C08F 210/08, C08F 210/16,**
**C08F 2500/12, C08F 2500/27, C08F 2500/35,**
**C08F 2500/34, C08F 2500/36, C08F 2500/26;**
**C08F 210/06, C08F 210/16, C08F 2500/12,**
**C08F 2500/27, C08F 2500/35, C08F 2500/34,**
**C08F 2500/33, C08F 2500/26;**
**C08L 23/142, C08L 23/142**

## Description

### Field of the invention

The present invention relates to a monolayer cast film made of a polypropylene-based composition (PC) comprising a specific single site catalysed propylene-ethylene copolymer base resin (SSC23) and a specific propylene-based elastomer and to the use of a polypropylene-based composition (PC) comprising a specific single site catalysed propylene-ethylene copolymer base resin (SSC23) and a specific propylene-based elastomer to produce a monolayer cast film or a layer of a multilayer film.

### Technical background

Currently packages are mainly based on multilayer structures as different layers serve different needs of properties. However, due to the requirements of sustainability (Design for Recyclability (DfR) approach), a lightweight solution and/or a simplified solution are highly appreciated. Moreover, the DfR regulations further define the limit of the amount of polyethylene (PE) in polypropylene (PP) and/or non-polyolefin (PO) in a PO blend.

Single site technology is the current state of art technology that aims at producing polymers fitting for DfR and can serve the needs of the current major application, e.g. sealing layers for BOPP and cast film. Together with an optimal polymer design, low sealing initiation temperature (SIT), high hot-tack forces, and better optics can be achieved. They can serve the needs of the current major application, e.g. sealing layers for BOPP and cast film.

One way of improving SIT through polymer design is by increasing the comonomer content, but this might not be the most feasible solution both technically and economically. Moreover, at a certain limit, extractables tend to increase. Another way is through post-reactor modification by elastomer blending. Typically, POE (thermoplastic polyolefin elastomer - PE based) is used, which is currently not preferred due to DfR limitation. The other aspect to be considered is the heat seal properties of the films, especially while the seal is still hot; i.e. Hot tack. On the other hand also optical properties, especially haze plays an important role..

To provide a good balance between these parameters, optimization of the polymer structure and recipe is needed.

EP 1 358 252 B1 claims a bioriented polypropylene film (BOPP) wherein at least one layer comprises a propylene polymer composition comprising a propylene random copolymer containing at least 0.8 wt.-% of one or more comonomers selected from ethylene and C4-C10 $\alpha$-olefins, and having a melting temperature $T_m$ of 155°C or higher, a XCS (25°C) lower than 3 wt.-%, and a value of the ratio of the polymer fraction collected by TREF method in the temperature range from 25°C to 95°C to the fraction soluble in xylene at room temperature higher than 8 wt.-%/wt.-%; and a $MFR_2$ from 1 to 10 g/10min. Propylene-ethylene copolymers are exemplified, but the $T_m$ and the haze are rather high and nothing is taught about SIT.

WO 2020/239561 A1 discloses a bimodal SSC-based propylene-ethylene random copolymer having a total C2 content from 2.5 to 5.5 wt.-%, modified with 5 to 30 wt.-% of a C3C4 based plastomer with modulus of 50 to 450 MPa and $T_m$ of 60 to 110°C. The used SSC-based propylene-ethylene random copolymer has a rather high XCS content. The optical properties of the disclosed cast films, such as clarity, especially after seam sterilization, leave room for further improvement.

EP 3280768 A1 discloses blends of bimodal SSC random copolymers and C3C2 based elastomers. The used SSC-based random copolymer has again a rather high XCS content, and the resulting compositions have a too low modulus, for e.g. sealing films.

Further, for manufacturing flexible and semi-rigid film packages, heat sealing is the predominant method. An important indication of good sealing performance is inter alia a low seal initiation temperature (SIT) necessary to support high speed on packaging machines and a broad sealing window. In addition, especially for food or medical applications of the packaging material, low amount of extractables and good optical properties, such as low haze and high clarity, even after sterilization are envisaged. Finally, to move sustainability, the packaging films should be recyclable by falling within the ranks A-B of Recyclass DfR guidelines. However, it frequently turns out that improvement of one of these properties is achieved on the expense of one or more of the other properties.

Against this background there is still a need to develop safe films combining improved sealing characteristics and improved optical properties based on a polymer design allowing recyclability of the material. Thus, to provide a good balance between these characteristics, an optimization of the polymer design and a polymer composition recipe is needed.

### Summary of the invention

It is the object of the present invention to provide a monolayer cast film made of a polypropylene-based composition having balanced properties, that is recyclable, showing improved sealing characteristics, especially in terms

of low SIT, good hot tack and broad sealing window, and improved optical properties, such as a low haze and high clarity, as well as the use of a polypropylene-based composition to produce a monolayer cast film or a layer of a multilayer film.

It has now been found that this object can be solved by a monolayer cast film made from a specific polypropylene-based composition (PC) comprising a specific single site catalysed propylene-ethylene random copolymer base resin (SSC23) and a specific propylene-based elastomer.

The present invention is therefore related to a monolayer cast film made of a polypropylene-based composition (PC) comprising, based on the total weight of the PC,

a) 60.0 to 95.0 wt.-% of a single site catalysed propylene-ethylene copolymer base resin (SSC23) having

- an ethylene (C2) content, according to quantitative $^{13}C$-nuclear magnetic resonance (NMR) spectroscopy as described in the experimental section, in the range of 0.5 to 3.5 wt.-% with respect the total weight of the SSC23;
- a melt flow rate $MFR_2$, according to ISO 1133 at 230°C and 2.16 kg load, in the range of 0.5 to 50.0 g/10min;
- a xylene cold solubles (XCS) content, according to ISO 16152 at 25°C, in the range of 0.1 to 3.0 wt.-%, based on the total weight of the SSC23;
- a melting temperature ($T_m$), according to DSC as described in the experimental section, in the range of 115.0 to 145.0°C;
- a crystallization temperature ($T_c$), according to DSC as described in the experimental section, in the range of 80.0 to 115.0°C and
- a number of 2,1 regio-defects measured by quantitative $^{13}C$-nuclear magnetic resonance (NMR) spectroscopy as described in the experimental section, in the range of 0.05 to 1.2 mol-% and

b) 5.0 to 40 wt.-%, based on the total weight of the PC, of a propylene-based elastomer being a terpolymer of propylene, ethylene and 1-butene having

- a density according to ISO 1183-1, in the range of 850 to 910 kg/m$^3$;
- a $MFR_2$, measured at 230°C and a load of 2.16 kg according to ISO 1133, in the range of 0.1 to 80.0 g/10 min;
- a melting point ($T_m$), according to DSC as described in the experimental section, in the range of 150 to 170°C;
- a xylene cold soluble (XCS) content, determined according to ISO 16152 at a temperature of 25°C, in the range of 70.0 to 100.0 wt.-%, based on the total weight of the propylene-based elastomer;
- a 1-butene content, measured by quantitative $^{13}C$-nuclear magnetic resonance (NMR) spectroscopy as described in the experimental part in the range of 5.0 to 30.0 wt.-%, based on the total weight of the propylene-based elastomer and
- an ethylene content, measured by quantitative $^{13}C$-nuclear magnetic resonance (NMR) spectroscopy as described in the experimental part in the range of 1.0 to 10.0 wt.-%, based on the total weight of the propylene-based elastomer.

By means of the above-identified configuration, in particular the tailored combination of the specific single site catalysed propylene-ethylene copolymer as base resin, having defined contents of comonomer and XCS, defined melt flow behavior and predetermined melting and crystallization temperatures, with a specific propylene-based elastomer of predetermined density and melt flow behavior, it is unexpectedly possible to provide a monolayer cast film with balanced properties, being recyclable and achieving the surprising technical effects of improved sealing characteristics, especially in terms of low SIT, good hot tack and broad sealing window, and improved optical properties, such as a low haze and high clarity, even after sterilization. That is, it is unexpectedly possible to attain favorable overall sealing film performance and properties by applying an optimized base polymer design and an optimized recipe of a polymer composition applying the base polymer with just low amount of the elastomer that still fall within the ranks A-B of Recyclass DfR guidelines.

The present invention further relates to the use of the polypropylene-based composition as indicated above to produce a monolayer cast film or a layer of a multilayer film.

Preferred embodiments of the invention are depicted in the dependent claims and a detailed description of the invention is provide in the following description.

**Detailed Description**

The term "comprising" (as well as terms "containing", "including" or "having") as used in the present invention does not exclude other components. For the purposes of the present invention, the term "consisting of" is considered to be a preferred embodiment of the term "comprising of" (as well as terms "containing", "including" or "having") unless specifically defined otherwise. Likewise, if hereinafter a group is defined to comprise at least a certain number of embodiments, this is also to be understood to disclose a group, which preferably consists only of these embodiments,

unless specifically defined otherwise. Further, unless explicitly described otherwise, the description of the present invention is to be understood so that one or more of any of the described preferred embodiments of the invention can be combined with the invention described in its most general features.

Further, where an indefinite or definite article is used when referring to a singular noun, e.g. "a", "an" or "the", this includes a plural of that noun unless something else is specifically stated.

In the following amounts are given in % by weight (wt.-%) unless it is stated otherwise.

When reference is made to a method or step or stage or reactor or apparatus (or similar) "for" producing or forming a certain material (e.g. polymer fraction) or "for" performing a certain action, this shall be understood that this step (or stage or reactor, etc.) is adapted to (configured to) produce (or form) that certain material or to perform this certain action.

The single site catalysed propylene-ethylene copolymer base resin refers to an propylene-ethylene copolymer base resin, which has been produced in the presence of a single site catalyst, such as a metallocene catalyst. The catalyst influences in particular the microstructure of the polymer. Accordingly, polypropylenes prepared by using a metallocene catalyst provide a different microstructure compared to those prepared by using Ziegler-Natta (ZN) catalysts, with the most significant difference being the presence of regio-defects in metallocene-made polypropylenes, which is not the case for polypropylenes made by Ziegler-Natta (ZN) catalysts.

Bi- or multimodal polymers are polymers having a bi- or multimodal distribution of one or more properties as obtainable by producing the polymer in two or multiple reactors coupled in series being operated under different conditions to obtain an in-reactor blend polymer. Bimodal propylene copolymers may typically be bimodal with respect to comonomer content or bimodal with respect to molecular weight (as seen through the melt flow rates of the first fraction and the final composition).

**Monolayer cast film made of a polypropylene-based composition (PC)**

The monolayer film of the present invention is made of a polypropylene-based composition (PC) comprising, based on the total weight of the PC,

a) 60.0 to 95.0 wt.-% of a single site catalysed propylene-ethylene copolymer base resin (SSC23) having

- an ethylene (C2) content, according to quantitative $^{13}C$-nuclear magnetic resonance (NMR) spectroscopy as described in the experimental section, in the range of 0.5 to 3.5 wt.-% with respect the total weight of the SSC23;
- a melt flow rate $MFR_2$, according to ISO 1133 at 230°C and 2.16 kg load, in the range of 0.5 to 50.0 g/10min;
- a xylene cold solubles (XCS) content, according to ISO 16152 at 25°C, in the range of 0.1 to 3.0 wt.-%, based on the total weight of the SSC23;
- a melting temperature ($T_m$), according to DSC as described in the experimental section, in the range of 115.0 to 145.0°C;
- a crystallization temperature ($T_c$), according to DSC as described in the experimental section, in the range of 80.0 to 115.0°C and
- a number of 2,1 regio-defects measured by quantitative $^{13}C$nuclear magnetic resonance (NMR) spectroscopy as described in the experimental section, in the range of 0.05 to 1.2 mol-% and

b) 5.0 to 40 wt.-%, based on the total weight of the PC, of a propylene-based elastomer being a terpolymer of propylene, ethylene and 1-butene having

- a density according to ISO 1183-1 in the range of 850 to 910 kg/m$^3$;
- a $MFR_2$, measured at 230°C and a load of 2.16 kg according to ISO 1133 in the range of 0.1 to 80.0 g/10 min;
- a melting point ($T_m$), according to DSC as described in the experimental section in the range of 150 to 170°C;
- a xylene cold soluble (XCS) content, determined according to ISO 16152 at a temperature of 25°C, in the range of 70.0 to 100.0 wt.-%, based on the total weight of the propylene-based elastomer;
- a 1-butene content, measured by quantitative $^{13}C$-nuclear magnetic resonance (NMR) spectroscopy as described in the experimental section in the range of 5.0 to 30.0 wt.-%, based on the total weight of the propylene-based elastomer and
- an ethylene content, measured by quantitative $^{13}C$-nuclear magnetic resonance (NMR) spectroscopy, as described in the experimental section in the range of 1.0 to 10.0 wt.-%, based on the total weight of the propylene-based elastomer.

It is to be noted that the term 'monolayer cast film made of a polypropylene-based composition (PC)' in accordance with the present invention refers to a film that essentially consists of the PC and may optionally contain

other component(s). The requirement applies that the PC and the other optional component(s), as far as being present, add up to 100 wt.-%, provided that the amount of the polypropylene-based composition (PC) accounts for at least 90.0 wt.-%, preferably at least 95.0 wt.-%, such as 95.0 to 100 wt.-% or 99.0 to 100 wt.-%, or even 100 wt.-% of the total weight of the monolayer cast film.

Further, the polypropylene-based composition (PC) constituting the monolayer film is characterized by comprising, based on the total weight of the PC, 60.0 to 95.0 wt.-% of a specific single site catalysed propylene-ethylene copolymer base resin (SSC23) and 5.0 to 40.0 wt.-% of an specific propylene-based elastomer.

Preferably, the polypropylene-based composition (PC) comprises, based on the total weight of the PC, 70.0 to 95.0 wt.-%, more preferably 80.0 to 93.0 wt.-% and most preferably 83.0 to 90.0 wt.-%, of the SSC23 and 5.0 to 30.0 wt.-%, more preferably 7.0 to 20.0 wt.-% and most preferably 10.0 to 17.0 wt.-% of the propylene-based elastomer. That is, the polypropylene-based composition (PC) in accordance with the present invention essentially comprises the SSC23 and the propylene-based elastomer and may further contain other component(s) such as additive(s). The requirement applies that the SSC23, the propylene-based elastomer and the other component(s), as far as being present, add up to 100 wt.-%, provided that the summed amount of the SSC23 and the propylene-based elastomer accounts for at least 94.0 wt.-% of the PC. Preferably, the PC of the present invention comprises, based on the total weight of the PC, 94.0 to 99.999 wt.-%, more preferably 96.0 to 99.99 wt.-%, even more preferably 97.0 to 99.95 wt.-%, and most preferably 97.5 to 99.90 wt.-%, of the summed amount of the SSC23 and the propylene-based elastomer, thereby significantly facilitating the recycling of film formed of the PC. It is to be understood that if various ranges are indicated, the lower and upper limit(s) of the various ranges can be suitable combined to form another range and this general principle applies throughout the entire application. Further, the present invention can attain the envisaged technical effects by combining the SSC23 and the propylene-based elastomer as the only polymer components, so that it is not necessary for the composition to contain polymer components other than the SSC23 and the propylene-based elastomer. However, provided that the essential characteristics of the present invention are not impaired, other polymers may be present for attaining certain properties. In a preferred embodiment, the PC contains no other polymer components than the SSC23 and the propylene-based elastomer, except for optional polymeric nucleating agent(s) and/or carrier polymers of a masterbatch for adding other component(s) such as additive(s). Further, the PC preferably comprises other component(s) such as additives.

Preferably, the PC comprises, based on the total weight of the PC, up to 6.0 wt.-%, preferably 0.01 to 3.5 wt.-%, more preferably 0.025 to 2.5 wt.-%, more preferably 0.05 to 1.5 wt.-%, or 0.075 to 1.0 wt.-%, additive(s), said additive(s) being preferably selected from the group consisting of slip agents, antiblocking agents, UV stabilizers, antistatic agents, alpha-nucleating agents, antioxidants and mixtures thereof. Notably, it is possible that two or more functions can be combined in the same molecule and such a constitution may be preferred to reduce the overall amount of additives. The additive(s) may be added to the composition in pure form or in the form of a masterbatch in a carrier resin. Where applicable and appropriate, the additive(s) may already be added to the SSC23 before blending with the propylene-based elastomer or even during the polymerization of the SSC23. Preferably, at least antioxidant(s), more preferably at least antioxidant(s) and acid scavenger(s) or at least antioxidant(s), acid scavenger(s) and antiblocking agents, are present as additive(s). Such additives are well known in the art and ensure favorable stability and/or performance of the PC in its designated application.

The methods to prepare a polymer composition represent common knowledge and the polypropylene-based composition (PC) of the present invention can for instance be obtained by blending (melt mixing) the single site catalysed propylene-ethylene copolymer base resin (SSC23) with the propylene-based elastomer and other components such as additive(s) as described above. Further, the other component(s) such as additive(s) may in the individual case already be pre-blended with the SSC23 and/or the propylene-based elastomer before blending the SSC23 and the propylene-based elastomer together. If technically feasible, other component(s) such as additive(s) may already be added during the polymerization of the SSC23 and e.g. a polymeric nucleating agent may be incorporated into the SSC23 as a polymer fraction by prepolymerization. The mixing of such components may be made in one or more steps. For mixing, a conventional compounding or blending apparatus, such as e.g. a Banbury® mixer, a 2-roll rubber mill, Buss-co-kneader, a single screw extruder with special mixing segments or a twin screw extruder may be used. The PC recovered from e.g. the extruder can be in the form of pellets or in a powdery state.

By means of the monolayer cast film made of the polypropylene-based composition (PC) combining a specific single site catalysed propylene-ethylene copolymer base resin (SSC23), as described in detail below, and the specific propylene-based elastomer, as described in detail below, the present invention is able to achieve a monolayer cast film with balanced properties, being recyclable and achieving the surprising technical effects of improved sealing characteristics, especially in terms of low SIT, good hot tack and broad sealing window, and improved optical properties, such as high clarity, even after sterilization.

Specifically, the present invention is able to provide a monolayer cast film preferably having a suitable sealing initiation temperature SIT, determined on a 50 μm cast film as described in the experimental section, of less than 110°C, more preferably in the range of 80 to 108°C, most preferably 90 to 106°C. Such SIT ensures a film with suitable sealing properties that allows high speed on packaging machines.

Specifically, the present invention is able to provide a monolayer cast film preferably having a suitable broad sealing window, determined as the difference of the melting temperature $T_m$ of the SSC23 and the SIT of the PC, of at least 20.0°C, such as 20.0 to 50.0°C, preferably 25.0 to 45.0°C and more preferably 30.0 to 40.0°C. Such broad sealing window ensures a film with a suitable broad processing window.

In addition, the monolayer cast film according to the present invention has a hot tack force, determined on a 50 μm cast film as described in the experimental section of at least 3.00 N, such as 3.10 to 5.00 N, preferably 3.20 to 4.50 N more preferably 3.30 to 4.00 N.

Specifically, the present invention is able to provide a monolayer cast film preferably having a haze, determined on a 50 μm cast film according to ASTM D1003-13, of less than 1.0%, more preferably in the range of 0.10 to 0.80%, even more preferably 0.20 to 0.60% and most preferably 0.25 to 0.50%.

In addition or alternatively the monolayer cast film according to the present invention has a clarity, determined on a 50 μm cast film according to ASTM D1003-13, of at least 98.0%, more preferably in the range of 99.0 to 100.0%, and most preferably in the range of 99.5 to 100.0%.

Preferably, the monolayer cast film according to the present invention has a clarity, determined on a 50 μm cast film according to ASTM D1003-13 after sterilization (steam sterilization at 121°C for 30 min, as described in the experimental section) of at least 97.0%, more preferably in the range of 97.5 to 100.0%, and most preferably in the range of 98.0 to 100.0%.

Such haze and/or clarity ensures a film with suitable optical properties being desired in the application of the films of the present invention.

Needless to say that each of the above described properties of the monolayer film (e.g. SIT, haze, clarity, etc.) as described herein may preferably be individually adjusted into a preferred or more preferred range, while it is even more preferred that two or more, most preferably all, of the above properties are adjusted into preferred and/or even more preferred ranges in combination. This principle generally applies throughout the entire application to other mentioned properties in connection with (preferred) quantifications.

Surprisingly, the present inventors found out that with the polypropylene-based composition (PC) essentially combining the later described single site catalysed propylene-ethylene copolymer base resin (SSC23) and the later described propylene-based elastomer, the envisaged film properties can be achieved even at a low content of the elastomeric modifier (propylene-based elastomer), i.e. a content of e.g. 7.0 to 20.0 wt.-%, such as exemplary 15.0±2.0 wt.-%, of the propylene-based elastomer based on the total weight of the PC. That means that it is unexpectedly possible to achieve the desired film properties by using a tailed combination of base resin and elastomeric modifier with the latter being required at a low amount only.

The monolayer cast film can have any form so that the film may be non-oriented or oriented and can be obtained by any process for producing cast films. Cast film technology optionally applying orientation technology is known to those skilled in the art and a more detailed description can be found in EP 3 064 548 A1.

The thickness of the monolayer cast film is not particularly limited and the monolayer cast film may generally have a thickness in the range of 1.0 to 100 μm, preferably 2.5 to 80 μm, more preferably 10 to 60 μm.

Thus, the monolayer cast films according to the present invention are especially suitable as sealing layer, as they have a low SIT, good hot tack and beneficial optical properties. The monolayer cast film may e.g. be a packaging film for consumer goods or medical packaging, without limitation.

## Single site catalysed propylene-ethylene copolymer base resin (SSC23)

The PC constituting the monolayer cast film of the present invention is characterized by essentially comprising a single site catalysed propylene-ethylene copolymer base resin (SSC23) having

- an ethylene (C2) content, according to quantitative $^{13}C$-nuclear magnetic resonance (NMR) spectroscopy as described in the experimental section, in the range of 0.5 to 3.5 wt.-% with respect the total weight of the SSC23;
- a melt flow rate $MFR_2$, according to ISO 1133 at 230°C and 2.16 kg load, in the range of 0.5 to 50.0 g/10min;
- a xylene cold solubles (XCS) content, according to ISO 16152 at 25°C, in the range of 0.1 to 3.0 wt.-%, based on the total weight of the SSC23;
- a melting temperature ($T_m$), according to DSC as described in the experimental section, in the range of 115.0 to 145.0°C;
- a crystallization temperature ($T_c$), according to DSC as described in the experimental section, in the range of 80.0 to 115.0°C and
- a number of 2,1 regio-defects measured by quantitative $^{13}C$-nuclear magnetic resonance (NMR) spectroscopy, as described in the experimental section, in the range of 0.05 to 1.2 mol-%.

By means of combining such SSC23 copolymer having optimized polymer design and the later described

propylene-based elastomer, the envisaged film properties can be achieved. That is, it is unexpectedly possible to achieve the desired film properties by using a tailed combination of said base resin and elastomeric modifier which is only required at a low amount.

A propylene-ethylene copolymer in this sense is a polymer essentially consisting of a molar majority of propylene monomer units and a molar minority of ethylene comonomer units.

Due to impurities especially during commercial polymerization processes, the propylene-ethylene copolymer can comprise up to 0.1 mol-% comonomer units different from propylene and ethylene, preferably up to 0.05 mol-% comonomer units different from propylene and ethylene and most preferably up to 0.01 mol-% comonomer units different from propylene and ethylene.

There exists a crucial difference in the chain-microstructure between polypropylene produced by a single site catalyst such as a metallocene catalyst and a Ziegler-Natta catalyst. The chain regularity of metallocene-based polypropylene is reduced by stereo- and regio-defects, whereas the chain regularity of Ziegler-Natta based polypropylenes is only reduced by stereo defects. It is essential that the present copolymer base resin (SSC23) is obtained in the presence of a single site polymerization catalyst, preferably a specific metallocene-type catalyst, which is preferably supported.

In that the copolymer base resin (SSC23) is produced by using specifically a single site catalyst advantageously applying a specific supported metallocene-type catalyst, more preferably applying a two-stage polymerization process, the present invention can provide a SSC23 meeting specific requirements in terms of C2 content, $MFR_2$, XCS content, $T_m$, and $T_c$ as described above.

Preferably, the SSC23 has an ethylene (C2) content, according to quantitative $^{13}C$-nuclear magnetic resonance (NMR) spectroscopy, as described in the experimental section, in the range of 0.8 to 3.0 wt.-%, more preferably 1.0 to 2.5 wt.-%, with respect the total weight of the SSC23. In this case, the effects of the present invention are more pronounced and/or their achievement is facilitated.

Preferably, the SSC23 has a melt flow rate $MFR_2$, according to ISO 1133 at 230°C and 2.16 kg load, in the range of 1.0 to 30.0 g/10min, more preferably 2.0 to 20.0 g/10min and even more preferably 5.0 to 15.0 g/10 min. In this case, the effects of the present invention are more pronounced and/or their achievement is facilitated.

Preferably, the SSC23 has a xylene cold solubles (XCS) content, according to ISO 16152 at 25°C, in the range of 0.10 to 2.0 wt.-%, more preferably 0.20 to 1.0 wt.-%, even more preferably 0.25 to 0.60 wt.-%, based on the total weight of the SSC23. In this case, the effects of the present invention are more pronounced and/or their achievement is facilitated.

Preferably, the SSC23 has a melting temperature $T_m$, according to DSC as described in the experimental section, in the range of 120.0 to 142.0°C, more preferably 125.0 to 140.0°C and even more preferably 130.0 to 138.0°C. In this case, the effects of the present invention are more pronounced and/or their achievement is facilitated especially in providing a broad sealing window.

Preferably, the SSC23 has a crystallization temperature ($T_c$), according to DSC as described in the experimental section, in the range of 85.0 to 110.0°C, more preferably 90.0 to 105.0°C. In this case, the effects of the present invention are more pronounced and/or their achievement is facilitated.

Preferably, the SSC23 has a number of 2,1 regio-defects measured by quantitative $^{13}C$-nuclear magnetic resonance (NMR) spectroscopy, as described in the experimental section, in the range of 0.10 to 1.0 mol-%, more preferably in the range of 0.20 to 0.80 mol-%.

Preferably, the SSC23 comprises at least, or consists of, two polymer fractions (SSC23-1) and (SSC23-2). In this case, the fraction SSC23-1 is preferably present in an amount of 52.0 to 80.0 wt.-%, more preferably 55.0 to 75.0 wt.-% and most preferably 58.0 to 70.0 wt.-%, based on the total weight of the SSC23, and the fraction SSC23-2 is preferably present in an amount of 20.0 to 48.0 wt.-%, more preferably 25.0 to 45.0 wt.-% and most preferably 30.0 to 42.0 wt.-%, based on the total weight of the SSC23.

The two polymer fractions (SSC23-1) and (SSC23-2), preferably have an ethylene content, based on the total weight of the respective fraction, in the range of 0.2 to 5.0 wt.-%, more preferably 0.4 to 4.0 wt.-% and most preferably 0.8 to 3.0 wt.-%. The ethylene content can be the same or can be different for the two fractions.

In this case, the effects of the present invention are more pronounced and/or their achievement is facilitated due to a suitable compatibility with the propylene-based elastomer.

In case the SSC23 comprises at least, or consists of, two polymer fractions (SSC23-1) and (SSC23-2), the fraction SSC23-1 preferably has a melt flow rate $MFR_2$, according to ISO 1133 at 230°C and 2.16 kg load, in the range of 1.0 to 5.0 g/10 min, more preferably 1.5 to 4.5 g/10 min and most preferably 2.0 to 4.0 g/10 min, and the fraction SSC23-2 preferably has a melt flow rate $MFR_2$, according to ISO 1133 at 230°C and 2.16 kg load, in the range of 0.1 to 3.0 g/10 min, more preferably 0.2 to 2.0 g/10 min and most preferably 0.3 to 1.5 g/10 min, wherein $MFR_2$ of fraction SSC23-1 is preferably higher than the $MFR_2$ of fraction SSC23-2. In this case, the effects of the present invention are more pronounced and/or their achievement is facilitated.

The general principle applies that each of the above described properties of the SSC23 (e.g. C2 content, $MFR_2$, XCS content, $T_m$, and $T_c$, two polymer fractions and their contents and $MFR_2$ etc.) as described herein may preferably be

individually adjusted into a preferred or more preferred range, while it is even more preferred that two or more, most preferably all, of the above properties are adjusted into preferred and/or even more preferred ranges in combination.

The copolymer base resin (SSC23) may comprise one or more additives as mentioned above, thereby contributing to a content thereof in the PC as defined above. In this case, a total amount of additives in the SSC23 is preferably in the range of 0.01 to 5.0 wt.-%, more preferably in the range of 0.05 to 3.0 wt.-% based on the total weight of the SSC23.

The single site catalysed propylene-ethylene copolymer base resin (SSC23) can be produced by any applicable polymerization method as long as the essential characteristics are attained. Polymerization processes which are suitable for producing the SSC23 base resin generally comprises one or two polymerization stages and each stage can be carried out in solution, slurry, fluidized bed, bulk or gas phase. The term "polymerization stage" or "polymerization reactor" indicates that the main polymerization takes place. Thus in case the process consists of one or two polymerization reactors/stages, this definition includes the option that the overall system comprises for instance a pre-polymerization step in a pre-polymerization reactor/stage. The term "consist of" is only a closing formulation in view of the main polymerization reactors/stages.

However, the SSC23 is preferably produced in a two-stage polymerization process, more preferably comprising a slurry reactor (e.g. loop reactor or first reactor R1), wherein the slurry (loop) reactor is connected in series to a gas phase reactor (GPR or second reactor R2), wherein the polymer fraction SSC23-1 is produced in the slurry (loop) reactor and the polymer fraction SSC23-2 is produced in GPR in the presence of the SSC23-1 to produce bimodal SSC23.

Such a process is in general described inter alia in WO 2016/198273 A1, WO2020/239603 A1, WO 2021/009189 A1, WO 2021/009190 A1, WO 2021/009191 A1 and WO 2021/009192 A1 and details of how to prepare single site (metallocene) catalysed bi- and multimodal polymers can be found in these references. A suitable and preferred process is the Borstar® process.

The copolymer base resin (SSC23) in its preferred embodiment comprising two fractions (SSC23-1) and (SSC23-2) may be produced in a process comprising the following steps:

a) polymerizing in a first reactor (R1) propylene and ethylene, obtaining polymer fraction (SSC23-1),
b) transferring said polymer fraction (SSC23-1) and unreacted comonomers of the first reactor in a second reactor (R2),
c) feeding to said second reactor (R2) propylene and ethylene,
d) polymerizing in said second reactor (R2) and in the presence of said polymer fraction (SSC23-1) propylene and ethylene to obtain polymer fraction (SSC23-2) as an in-reactor blend with SSC23-1 and hence the final single site catalysed propylene-ethylene copolymer base resin (SSC23), wherein the polymerization takes place in the presence of a single site catalyst, such as preferably a metallocene catalyst system as described in the following.

Conditions for operating a slurry reactor (e.g. loop reactor) and a GPR and how to adjust and fine-tune final polymer properties are known to the skilled person or can be determined by orientating experimentation. Preferred operation conditions in the slurry reactor may be as follows:

- temperature within the range of 50 to 90°C, more preferably 55 to 85°C, most preferably 60 to 80°C, e.g. 70±5°C,
- pressure within the range of 30 to 75 bar, more preferably 40 to 70 bar, most preferably 45 to 60 bar, e.g. 53±5 bar,
- hydrogen can be added for controlling the molar mass in a manner known per se.

Preferred operation conditions in the GPR may be as follows:

- temperature within the range of 50 to 130°C, more preferably 60 to 100°C, most preferably 70 to 90°C, e.g. 82±5°C,
- pressure within the range of 5 to 45 bar, more preferably 15 to 40 bar, e.g. 25±5 bar,
- hydrogen can be added for controlling the molar mass in a manner known per se.

The SSC23 is thus preferably bimodal by being made in a two-stage polymerization process applying a slurry (loop or R1) - gas phase reactor (GPR or R2) cascade, such that the SSC23-1 is made in the R1 (slurry reactor) and the SSC23-2 is made in the R2 (GPR).

Such polymerization steps may preferably be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt.-%) of the first component (SSC23-1). It is understood that the amount of polymer produced in the prepolymerization may be within 1 to 5 wt.-% in respect to the final SSC23.

The SSC23 having the above properties can suitable and preferably be produced in the presence of a single site metallocene complex of formula (I):

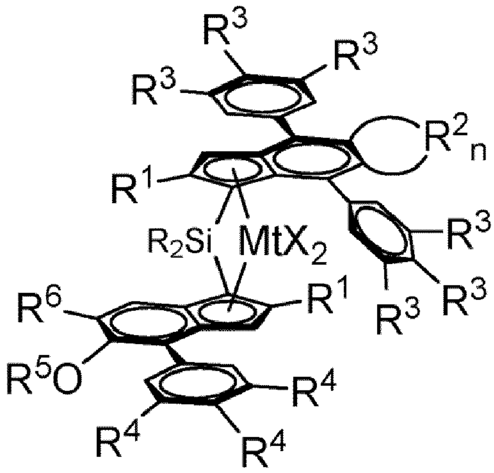

Formula (I)

wherein

Mt is Hf or Zr, preferably Zr;
each X is a sigma-ligand, preferably a chlorine, a benzyl or a methyl group,
each $R^1$ independently is the same or can be different and is a $CH_2$-$R^7$ group, with $R^7$ being H, a linear or branched $C_{1-6}$ alkyl group, an $C_{3-8}$ cycloalkyl group, or an $C_{6-10}$ aryl group,
each $R^2$ is independently a -CH=, -CY=, -$CH_2$-, -CHY- or -$CY_2$- group, wherein Y is a $C_{1-10}$ hydrocarbyl group and n is 2-6,
each $R^3$ and $R^4$ is independently the same or can be different and is hydrogen, a linear or branched $C_{1-6}$-alkyl group, an OZ group, wherein Z is a $C_{1-4}$ hydrocarbyl group, a $C_{7-20}$ arylalkyl, a $C_{7-20}$ alkylaryl group or a $C_{6-20}$ aryl group, wherein at least one $R^3$ per phenyl group and at least one $R^4$ is not hydrogen, and optionally two adjacent $R^3$ or $R^4$ groups can be part of a ring including the phenyl carbons to which they are bonded,
$R^5$ is a linear or branched $C_{1-6}$ alkyl group, $C_{7-20}$ arylalkyl, $C_{7-20}$ alkylaryl group or $C_{6-20}$ aryl group,
$R^6$ is a $C(R^8)_3$ group, with $R^8$ being a linear or branched $C_{1-6}$ alkyl group,
each R is independently a $C_{1-20}$ hydrocarbyl, $C_{6-20}$ aryl, $C_{7-20}$ arylalkyl or $C_{7-20}$ alkylaryl.

More preferably, the metallocene complex of formula (I) is a complex with the formula (Ia):

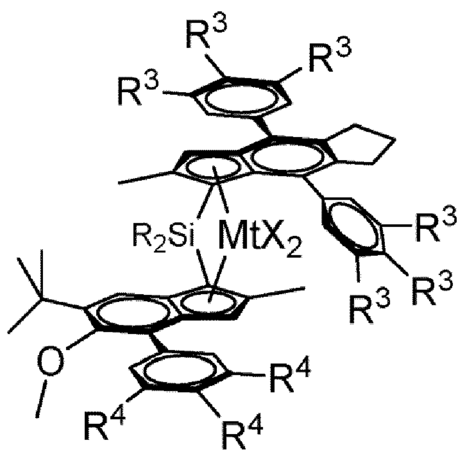

(Ia)

wherein each $R^3$ and $R^4$ is independently the same or can be different and is hydrogen or a linear or branched $C_{1-6}$ alkyl group, wherein at least one $R^3$ per phenyl group and at least one $R^4$ is not hydrogen;
R is a $C_{1-10}$ hydrocarbyl group, preferably a $C_{1-4}$ hydrocarbyl group and more preferably a methyl group and X independently is a hydrogen atom, a halogen atom, a $C_{1-6}$ alkoxy group, a $C_{1-6}$ alkyl group, a phenyl group or a benzyl

group and preferably chlorine, a benzyl group or a methyl group.

Even more preferably, the metallocene complex used in the present invention is rac-anti-dimethylsilanediyl[2-methyl-4,8-bis-(4'-tert-butylphenyl)-1,5,6,7-tetrahydro-s-indacen-1-yl][2-methyl-4-(3',5'-dimethylphenyl)-5-methoxy-6-tert-butylinden-1-yl] zirconium dichloride, or

rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-tert-butylinden-1-yl] zirconium dichloride, or
rac-anti-dimethylsilanediyl[2-methyl-4,8-bis-(3',5'-dimethylphenyl)-1,5,6,7-tetrahydro-s-indacen-1-yl][2-methyl-4-(3',5'-di-tert-butylphenyl)-5-methoxy-6-tert-butylinden-1-yl] zirconium dichloride,
or their corresponding zirconium dimethyl analogues, and
wherein the metallocene complex is most preferably
rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-tert-butylinden-1-yl] zirconium dichloride.

Further, the SSC23 is preferably produced in the presence of the (above) single site metallocene complex and one or more co-catalysts, preferably including at least an aluminoxane, which is preferably methylaluminoxane (MAO), more preferably a combination of an alumoxane with a boron-based cocatalyst, most preferably MAO and trityl-tetrakis(pentafluorophenyl) borate.

The catalyst in the present invention can be used in supported or unsupported form, but is preferably used in supported form. The support material used is preferably an inorganic material, such as silica, alumina or zirconia or a mixed oxide such as silica-alumina, in particular silica, alumina or silica-alumina. The use of a silica support is more preferred. The person skilled in the art is aware of the procedures required to support a metallocene catalyst.

More details about how to synthesize the above preferred single site metallocene complex, about suitable co-catalysts and about suitable supports can be found e.g. in WO2019/179959 A1 and WO2020/239603 A1, which respective contents are herein included by way of reference.

**Propylene-based elastomer**

The PC constituting the monolayer cast film of the present invention is characterized by essentially comprising an propylene-based elastomer being a terpolymer of propylene, ethylene and 1-butene having i.a. a density, according to ISO 1183-1, in the range of 850.0 to 910.0 kg/m$^3$; and a melt flow rate $MFR_2$, according to ISO 1133 at 230°C and 2.16 kg load, in the range of 0.10 to 80.0 g/10min.

By means of combining such propylene-based elastomer with the above described SSC23 copolymer base resin having optimized polymer design, the envisaged film properties can be achieved. That is, it is unexpectedly possible to achieve the desired film properties by using only a low amount of the propylene-based elastomer as an elastomeric modifier.

Preferably, the propylene-based elastomer has a density, according to ISO 1183-1, in the range of 855.0 to 900.0 kg/m$^3$, more preferably 860.0 to 890.0 kg/m$^3$. In this case, the effects of the present invention are more pronounced and/or their achievement is facilitated.

Preferably, the propylene-based elastomer has a melt flow rate $MFR_2$, according to ISO 1133 at 230°C and 2.16 kg load, in the range of 0.50 to 50.0 g/10min, more preferably 1.0 to 20.0 g/10min and even more preferably 2.0 to 10.0 g/10 min. In this case, the effects of the present invention are more pronounced and/or their achievement is facilitated.

In addition the propylene-based elastomer has a melting temperature $T_m$, according to DSC as described in the experimental section, in the range of 150.0 to 170.0°C, preferably 153.0 to 168.0°C and more preferably 155.0 to 165.0°C, like 160.0±2°C. In this case, the effects of the present invention are more pronounced and/or their achievement is facilitated.

Furthermore the propylene-based elastomer has a xylene cold soluble (XCS) content, determined according to ISO 16152 at a temperature of 25°C, in the range of 70.0 to 100.0 wt.-%, more preferably 80.0 to 100.0 wt.-% based on the total weight of the propylene-based elastomer.

The propylene-based elastomer is a terpolymer of propylene, ethylene and 1-butene.

The 1-butene content, measured by quantitative $^{13}$C-nuclear magnetic resonance (NMR) spectroscopy, as described in the experimental section, is in the range of 6.0 to 25.0 wt.-%, more preferably 10.0 to 22.0 wt.-%, based on the total weight of the propylene-based elastomer and an ethylene content, measured by quantitative $^{13}$C-nuclear magnetic resonance (NMR) spectroscopy, as described in the experimental section, in the range of 2.0 to 10.0 wt.-%, more preferably 3.5 to 8.0 wt.-%, based on the total weight of the propylene-based elastomer.

According to a preferred embodiment in accordance with the present invention the propylene-based elastomer has in addition a glass transition temperature determined by dynamic mechanical analysis according to ISO 6721 below -5°C, more preferably in the range of -35 to below -5°C, still preferably in the range of -30 to -10°C.

The propylene-based elastomers in accordance with the present invention are commercially available, e.g. from Mitsui under the tradename Tafmer™ PN, former Notio™ (such as e.g. Tafmer™ PN-2060, Tafmer™ PN-3560, Tafmer™ PN-0040).

**Use of polypropylene-based composition (PC)**

All preferred aspects and embodiments as described above shall also hold for the use according to the present invention.

The present invention further relates to the use of a polypropylene-based composition (PC) comprising, based on the total weight of the PC,

a) 60.0 to 95.0 wt.-% of a single site catalysed propylene-ethylene copolymer base resin (SSC23) having

- an ethylene (C2) content, according quantitative $^{13}C$-nuclear magnetic resonance (NMR) spectroscopy, as described in the experimental section, in the range of 0.5 to 3.5 wt.-% with respect the total weight of the SSC23;
- a melt flow rate $MFR_2$, according to ISO 1133 at 230°C and 2.16 kg load, in the range of 0.5 to 50.0 g/10min;
- a xylene cold solubles (XCS) content, according to ISO 16152 at 25°C, in the range of 0.1 to 3.0 wt.-%, based on the total weight of the SSC23;
- a melting temperature ($T_m$), according to DSC as described in the experimental section, in the range of 115.0 to 145.0°C;
- a crystallization temperature ($T_c$), according to DSC as described in the experimental section, in the range of 80.0 to 115.0°C and
- a number of 2,1 regio-defects measured by quantitative $^{13}C$-nuclear magnetic resonance (NMR) spectroscopy, as described in the experimental section, in the range of 0.05 to 1.2 mol-% and

b) 5.0 to 40 wt.-%, based on the total weight of the PC, of a propylene-based elastomer being a terpolymer of propylene, ethylene and 1-butene having

- a density according to ISO 1183-1 in the range of 850 to 910 kg/m$^3$;
- a $MFR_2$, measured at 230°C and a load of 2.16 kg according to ISO 1133 in the range of 0.1 to 80.0 g/10 min;
- a melting point ($T_m$), according to DSC as described in the experimental section, in the range of 150 to 170°C;
- a xylene cold soluble (XCS) content, determined according to ISO 16152 at a temperature of 25°C, in the range of 70.0 to 100.0 wt.-%, based on the total weight of the propylene-based elastomer;
- a 1-butene content, measured by quantitative $^{13}C$-nuclear magnetic resonance (NMR) spectroscopy, as described in the experimental section, in the range of 5.0 to 30.0 wt.-%, based on the total weight of the propylene-based elastomer and
- an ethylene content, measured by quantitative $^{13}C$-nuclear magnetic resonance (NMR) spectroscopy, as described in the experimental section, in the range of 1.0 to 10.0 wt.-%, based on the total weight of the propylene-based elastomer.

to produce a monolayer cast film or a layer of a multilayer film.

The polypropylene-based composition (PC), the single site catalysed propylene-ethylene copolymer base resin (SSC23) and the propylene-based elastomer according to the use of the present invention preferably refer to the PC, SSC23 and the propylene-based elastomer as described in detail above, so that the above description applies in an analogous manner making a detailed description dispensable at that point.

Further, in case the polypropylene-based composition (PC) is used to produce a monolayer cast film, the above description regarding the monolayer cast film according to the present invention applies in an analogous manner making a detailed description dispensable at that point.

The polypropylene-based composition (PC) may also be used to produce a layer of a multilayer film, especially a sealing layer in a multilayer film construction, as is has a low SIT and good hot tack as well as beneficial optical properties.

A multi-layer film construction comprising at least one layer made using the PC is preferably produced by multi-layer co-extrusion followed by film casting. In this case, at least one of the outermost layers of said multilayer film construction serving as sealing layer(s) is made using the inventive PC as defined above. The multilayer film construction may preferably have a thickness in the range of 30 to 500 $\mu$m, more preferably in the range of 50 to 400 $\mu$m, like in the range of 60 to 300 $\mu$m. The sealing layer(s) comprising the inventive PC may preferably have a thickness in the range of 3 to 50 $\mu$m, more preferably in the range of 5 to 30 $\mu$m, like in the range of 8 to 25 $\mu$m.

The film may e.g. be a packaging film for consumer goods or medical packaging, without limitation.

The invention will now be described with reference to the following non-limiting examples.

## Examples

### 1. Measuring methods

The following definitions of terms and determination methods apply for the above general description of the invention as well as to the below examples unless otherwise defined.

*Melt flow rate (MFR)*

The melt flow rate (MFR) was determined according to ISO 1133 and is indicated in g/10 min. The MFR was determined at 230°C for polypropylene and polypropylene compositions, as well as for the propylene-based elastomer. The MFR was determined at a loading of 2.16 kg. If the MFR of a polymer component, e.g. second component SSC23-2, cannot be measured, because it cannot be isolated from the mixture of the first fraction SSC23-1 and the second component SSC23-2, then it can be calculated as follows:

Calculation of $MFR_2$ of component SSC23-2:

$$logA = x \cdot logB + (1 - x) \cdot logC$$

$$C = 10^\wedge \frac{(logA - x.logB)}{(1-x)}$$

For component SSC23-2:

B = $MFR_2$ of first fraction SSC23-1
C = $MFR_2$ of second fraction SSC23-2
A = final $MFR_2$ (mixture) of polymer (=SSC23)
X = weight fraction of the first fraction SSC23-1

*Xylene cold soluble content (XCS, wt.-%) of SSC23 and propylene-based elastomer*

The amount of the polymer soluble in xylene was determined at 25°C according to ISO 16152:2022. Calculation of the XCS of a polymer fraction (e.g. SSC23-2), e.g. if it cannot be measured, because it cannot be isolated from the mixture, can be done in line with the principle and systematic of the formulas in WO 2017/148970 A1 (see section "calculations").

*Density of SSC23 and propylene-based elastomer*

The density of a polymer or polymer composition and the propylene-based elastomer was measured according to ISO 1183-1 on compression-molded specimen prepared according to ISO 19069-2:2016 is given in $kg/m^3$.

*DSC analysis, melting temperature ($T_m$), melting enthalpy ($H_m$), crystallization temperature ($T_c$) and crystallization enthalpy ($H_c$)*

Melting peak temperatures ($T_m$), melting enthalpies ($H_m$), crystallization peak temperature ($T_c$) and crystallization enthalpy ($H_c$) were measured with a TA Instrument Q200 differential scanning calorimetry (DSC) on 5 to 7 mg samples. DSC was run according to ISO 11357-3 /method C2 in a heat / cool / heat cycle with a scan rate of 10°C/min in the temperature range of -30 to +225°C. Crystallization peak temperature ($T_c$) and crystallization enthalpy ($H_c$) were determined from the cooling step, while melting peak temperature(s) ($T_m$) and melting enthalpy(ies) ($H_m$) were determined from the second heating step.

*Quantification of microstructure by NMR spectroscopy of SSC23*

Quantitative nuclear-magnetic resonance (NMR) spectroscopy was further used to quantify the comonomer

content and comonomer sequence distribution of the polymers. Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics. Approximately 200 mg of material was dissolved in 3 ml of *1,2*-tetrachloroethane-$d_2$ (TCE-$d_2$) along with chromium-(III)-acetylacetonate ($Cr(acac)_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra.

Quantitative $^{13}C\{^1H\}$ NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

With characteristic signals corresponding to 2,1 erythro regio defects observed (as described in L. Resconi, L. Cavallo, A. Fait, F. Piemontesi, Chem. Rev. 2000, 100 (4), 1253, in Cheng, H. N., Macromolecules 1984, 17, 1950, and in W-J. Wang and S. Zhu, Macromolecules 2000, 33 1157) the correction for the influence of the regio defects on determined properties was required. Characteristic signals corresponding to other types of regio defects were not observed.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\text{-}\%] = 100 * fE$$

The weight percent comonomer incorporation was calculated from the mole fraction:

$$E\ [wt.\text{-}\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

Calculation of the comonomer (e.g. ethylene) content of a polymer fraction (e.g. SSC23-2), e.g. if it cannot be measured, because it cannot be isolated from the mixture, can be done in line with the principle and systematic of the formulas in WO 2017/148970 A1 (see section "calculations").

*Description of microstructure quantification by NMR spectroscopy for propylene-based elastomer*

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05, griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the αB2 sites at 43.6 ppm accounting for the number of reporting sites per comonomer:

$$B = I_{\alpha B2} / 2$$

The amount of consecutively incorporated 1-butene in PBBP sequences was quantified using the integral of the ααB2B2 site at 40.5 ppm accounting for the number of reporting sites per comonomer:

$$BB = 2 * I_{\alpha\alpha B2B2}$$

In presence of BB the value of B must be corrected for the influence of the αB2 sites resulting from BB:

$$B = (I_{\alpha B2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the Sββ sites at 24.3 ppm accounting for the number of reporting sites per comonomer:

$$E = I_{S\beta\beta}$$

If characteristic signals corresponding to consecutive incorporation of ethylene in PEE sequence was observed the Sβδ site at 27.0 ppm was used for quantification:

$$EE = I_{S\beta\delta}$$

Characteristic signals corresponding to regio defects were observed {resconi00}. The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent Sαβ signals at 34.8 ppm and 34.4 ppm respectively and the Tγγ at 33.7 ppm.

The amount of isolated 2,1-erythro regio defects ($P_{21e\ isolated}$) was quantified using the integral of the methylene site at 42.4 ppm ($I_{e9}$):

$$P_{21e\ isolated} = I_{e9}$$

If present the amount of 2,1 regio defect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regio defects:

$$E_{total} = E + EE + P_{E21}$$

The amount of propene was quantified based on the $S\alpha\alpha$ methylene sites at 46.7 ppm including all additional propene units not covered by $S\alpha\alpha$ e.g. the factor $3*P_{21e\ isolated}$ accounts for the three missing propene units from isolated 2,1-erythro regio defects:

$$P_{total} = I_{S\alpha\alpha} + 3*P_{21e\ isolated} + B + 0.5*BB + E + 0.5*EE + 2*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B\ [mol\text{-}\%] = 100 * fB$$

$$E\ [mol\text{-}\%] = 100 * fE$$

The weight percent comonomer incorporation was calculated from the mole fractions:

$$B\ [wt.\text{-}\%] = 100 * ( fB * 56.11 ) / ( (fE * 28.05) + (fB * 56.11) + ((1-(fE+fB)) * 42.08) )$$

$$E\ [wt.\text{-}\%] = 100 * ( fE * 28.05 ) / ( (fE * 28.05) + (fB * 56.11) + ((1-(fE+fB)) * 42.08) )$$

The mole percent of isolated 2,1-erythro regio defects was quantified with respect to all propene:

$$[21e]\ mol\text{-}\% = 100 * P_{21e\ isolated} / P_{total}$$

The mole percent of 2,1 regio defects adjacent to ethylene was quantified with respect to all propene:

$$[E21]\ mol\text{-}\% = 100 * P_{E21} / P_{total}$$

The total amount of 2,1 defects was quantified as following:

$$[21]\ mol\text{-}\% = [21e] + [E21]$$

Characteristic signals corresponding to other types of regio defects (2,1-threo, 3,1 insertion) were not observed {resconi00}.

klimke06: Klimke, K., Parkinson, M., Piel, C., Kaminsky, W, Spiess, H.W., Wilhelm, M., Macromol. Chem. Phys. 2006;207:382.
parkinson07: Parkinson, M., Klimke, K., Spiess, H.W, Wilhelm, M., Macromol. Chem. Phys. 2007;208:2128.

pollard04: Pollard, M., Klimke, K., Graf, R., Spiess, H.W, Wilhelm, M., Sperber, O., Piel, C., Kaminsky, W., Macromolecules 2004;37:813.
filip05: Filip, X., Tripon, C., Filip, C., J. Mag. Resn. 2005, 176, 239.
griffin07: Griffin, J.M., Tripon, C., Samoson, A., Filip, C., and Brown, S.P., Mag. Res. in Chem. 200745, S1, S198.
castignolles09: Castignolles, P., Graf, R., Parkinson, M., Wilhelm, M., Gaborieau, M., Polymer 50 (2009) 2373.
resconi00: Resconi, L., Cavallo, L., Fait, A., Piemontesi, F., Chem. Rev. 2000, 100, 1253.
brandolini01: A.J. Brandolini, D.D. Hills, "NMR spectra of polymers and polymer additives", Marcel Deker Inc., 2000.

The **glass transition temperature $T_g$** was determined by dynamic mechanical analysis according to ISO 6721-7. The measurements were done in torsion mode on compression moulded samples (40x10x1 $mm^3$) between -100 °C and +150 °C with a heating rate of 2 °C/min and a frequency of 1 Hz.

**Sealing initiation temperature (SIT); sealing end temperature (SET), sealing range:**

This method was used to determine the sealing window (sealing temperature range) of 50 microns monolayer cast films produced as indicated under 'Film sample preparation'. The procedure is similar to hot tack measurement, but in contrast to hot tack the sealing range applies to the strength of the seal after it had cooled (delay time of 30 s).
Sealing range = (Seal initiation temperature until Seal end temperature)

The determined results give the user a quantitatively useful indication of the strength of the sealed films and show the temperature range for optimal sealing.

The lower limit (Sealing Initiation Temperature - SIT) is the sealing temperature at which a sealing force of 5 N is achieved. The upper limit (Sealing End Temperature - SET) is identified, before the film burns through.

The temperature interval was set by default to 5°C, but can be reduced to 1°C when the curve shows a sharp increase or decrease in the force values in order to represent a better curve profile.

Deviating from ASTM F1921 - 12, the test parameters sealing pressure, sealing time, delay time and clamp separation rate were modified. The determination of the force/temperature curve was continued until thermal failure of the film. In addition to failure mode evaluations described in the standard, additional failure modes were used.

To characterize the material, the measured values sealing range start temperature (SIT), temperature at max. force (MAX) and sealing range end temperature (SET) were also determined.

*Standard conditions:*

Conditioning time: > 96 h
Sealing jaws dimension: 50x5 mm
Sealing jaws shape: flat
Sealing jaws coating: Niptef
Sealing temperature: ambient - 240°C
Sealing temperature interval: 5°C
Sealing time: 1 sec
Delay time: 30 sec
Sealing pressure: 0.67 $N/mm^2$ (PP)
Clamp separation rate: 42 mm/sec
Sealing initiation force: 5 N
Sample width: 25 mm

*Results:*

The output of this method is a sealing curve.

- Sealing initiation temperature [°C]
- Sealing end temperature [°C]
- Temperature at max. Force [°C]
- Max. Force [N]
- Rel. max. Force [N/cm]
- Energy to max. Force [mJ]
- Total Energy [mJ]

- Total Strain [%]
- Thickness [mm]
- Failure modes (Failure + Type of failure)

**Hot Tack temperature** (lowest temperature to get maximum Hot tack force) and **Hot tack** (maximum Hot tack force) were measured according to ASTM F 1921 method B-modified on a monolayer cast film of 50 μm thickness with below settings:

| | |
|---|---|
| Q-name instrument: | Hot Tack - Sealing Tester |
| Model: | J&B model 4000 MB |
| Sealbar length: | 50 [mm] |
| Seal bar width: | 5 [mm] |
| Seal bar shape: | flat |
| Seal Pressure: | 0.15 $N/mm^2$ |
| Seal Time: | 1s |
| Coating of sealing bars: | NIPTEF® |
| Roughness of coating sealing bars: | 1 [μm] |
| Film Specimen width: | 25 mm |
| Cool time: | 0.2 s |
| Peel Speed: | 200 mm/s |
| Start temperature: | 50 °C |
| End temperature: | burn through and/or shrinking |
| Increments: | 5 °C |

All film test specimens were prepared in standard atmospheres for conditioning and testing at 23°C (± 2 °C) and 50 % (± 10 %) relative humidity. The minimum conditioning time of test specimen in standard atmosphere just before start testing is at least 16h. The minimum storage time between extrusion of film sample and start testing is at least 88 h. The hot-tack measurement determines the strength of heat seals formed in the films, immediately after the seal has been made and before it cools to ambient temperature.

The hot-tack force was measured as a function of temperature within the temperature range and with temperature increments as indicated above. The number of test specimens were at least 3 specimens per temperature. The Hot-tack force is evaluated as the highest force (maximum peak value) with failure mode "peel".

**Haze and Clarity**

Haze and clarity was determined according to ASTM D 1003-13 on monolayer cast films with 50 μm thickness as produced indicated below.

**Steam sterilization** was performed in in an autoclave (airtight, jacketed chamber), and is performed under pressure with saturated steam (water vapour in a state of equilibrium between condensation and evaporation). The film samples were heated up at a heating rate of 5 °C/min starting from 23°C. After having been kept for 30 min at 121°C, the samples were removed from the autoclave at a temperature < 80 °C (minimum cooling time of 20 minutes) and stored in a laboratory with controlled environment conditions.
Conditioning time after sterilization before testing: 168 h ± 24 h

**Film sample preparation**

The film samples have been produced on a small-scale laboratory cast film line from company COLLIN Lab & Pilot Solutions GmbH.

The line consists of an extruder with a Ø 30 mm screw with an LID ration of 30. The extruder temperature has been set at 250°C, resulting in a melt temperature of 240°C. The extruder is followed by a flat-die with a width of 300 mm. The die has a flexible die lip with a die gap of 0.5 -1.5 mm. The line has been run at a constant throughput of 8 kg/h and a line speed of 10 m/min, resulting in a film thickness of 50 μm. The film was cooled by three serial arranged chill-rolls with a temperature of 25°C in combination with an air-knife.

**Catalyst**

*Catalyst complex*

The metallocene complex rac-anti-dimethylsilanediyl[2-methyl-4,8-bis(3',5'-dimethylphenyl)-1,5,6,7-tetrahydro-s-indacen-1-yl][2-methyl-4-(3',5'-dimethylphenyl)-5-methoxy-6-tert-butylinden-1-yl] zirconium dichloride has been used as described in WO 2020/239603 A1 (MC3).

*Preparation of MAO-silica support*

A steel reactor equipped with a mechanical stirrer and a filter net was flushed with nitrogen and the reactor temperature was set to 20°C. Next silica grade DM-L-303 from AGC Si-Tech Co, pre-calcined at 600°C (7.4 kg) was added from a feeding drum followed by careful pressuring and depressurising with nitrogen using manual valves. Then toluene (32.2 kg) was added. The mixture was stirred (40 rpm) for 15 min. Next 30 wt.-% solution of MAO in toluene (17.5 kg) from Lanxess was added via 12 mm line on the top of the reactor within 70 min. The reaction mixture was then heated up to 90°C and stirred at 90°C for additional two hours. The slurry was allowed to settle and the mother liquor was filtered off. The MAO treated silica support was washed twice with toluene (32.2 kg) at 90°C, following by settling and filtration. The reactor was cooled off to 60°C and the solid was washed with heptane (32.2 kg). Finally MAO treated SiO2 was dried at 60°C for 2h under nitrogen flow 2 kg/h, pressure 0.3 barg and then for 5 hours under vacuum (-0.5 barg) with stirring at 5 rpm. MAO treated support was collected as a free-flowing white powder found to contain 12.7 wt.-% Al.

*Single site catalyst system preparation*

In a nitrogen filled glovebox, a solution of MAO 0.12 mL (30 wt.-% in toluene, AXION 1330 CA Lanxess) in dry toluene (1 mL) was added to an aliquot of the metallocene (17.6 mg, 19 μmol). The mixture was stirred for 60 minutes at room temperature. Next, trityl tetrakis(pentafluorophenyl) borate (18.0 mg, 20 μmol) was added to the mixture, and the mixture was stirred for another hour at room temperature. 1.0 g of MAO treated silica prepared as described above, was placed in a glass flask. A solution of metallocene, Borate and MAO in toluene was then slowly added to the support over the course of 5 minutes with gentle mixing. The resulting mixture was shaken well and allowed to stay overnight. The resulting cake was washed with 5 mL of toluene at room temperature, and then was dried in vacuum for 1 hour to yield 1.2 g of the catalyst as pink free flowing powder containing 11.3 wt.-% Al and 0.089 wt.-% Zr according to the ICP analysis.

*Polymerization of single site catalysed propylene-ethylene copolymer base resin* (SSC23)

The single site catalysed propylene-ethylene polymer base resin (SSC23) according to the invention (SSC23-IE) is a bimodal copolymer which was produced in a Borstar® pilot plant with a 2-reactor set-up (loop-GPR) and a prepolymerization loop reactor by using the above catalyst added to the prepolymerization reactor and applying the polymerization conditions as given in Table 1 below.

| **Table 1:** Polymerization conditions | | SSC23-IE |
|---|---|---|
| **PREPOLY (P)** | | |
| temperature | °C | 18 |
| H2 feed | g/h | 0.2 |
| Catalyst feed | g/h | 2.6 |
| press. reactor | barg | 53 |
| **LOOP (L)** | | |
| pressure | barg | 53 |
| temperature | °C | 70 |
| Feed H2/C3 | mol/kmol | 0.18 |
| Feed C2/C3 | mol/kmol | 30.0 |
| Split P + L | wt.-% | 60 |
| $MFR_2$ (SSC23-1) | g/10min | 3.3 |
| C2 (SSC23-1) | wt.-% | 2.0 |

(continued)

| GPR | | - |
|---|---|---|
| temperature | °C | 82 |
| pressure | barg | 25 |
| H2/C3 ratio | mol/kmol | 3.5 |
| C2/C3 ratio | mol/kmol | 126.0 |
| split | wt.-% | 40 |
| C2 (SSC23-2) | wt.-% | 2.3 |
| $MFR_2$ (SSC23-2) | g/10min | 0.9 |
| **Powder** | | |
| $MFR_2$ | g/10 min | 1.96 |
| XCS | wt.-% | 0.37 |
| C2 | wt.-% | 2.1 |

Further, the polymer powder of SSC23-IE (99.75 wt.-%) was compounded in a co-rotating twin-screw extruder Coperion ZSK 70 at 220°C with 0.15 wt.-% of a PoxPP masterbatch for visbreaking (DHBP-20-IC5 of United Initiators, USA, with 20 wt.-% 2,5-Dimethyl-2,5-di(tert.butylperoxy)hexane, CAS 78-63-7).0.033 wt.-% antioxidant, which is pentaerythrityl-tetrakis(3-(3',5'-di-tert-butyl-4-hydroxyphenyl)-propionate (Irganox1010 (FF) BASF; CAS 6683-19-8), 0.067 wt.-% antioxidant, which is tris (2,4-di-t-butylphenyl) phosphite (Irgafos 168 (FF) BASF; CAS 31570-04-4), 0.015 wt.-% acid scavenger, which is magnesium oxide MgO; (CAS 1309-48-4; Magnesiumoxid aktiv SF, Producer: Lehmann & Voss), and pelletized. The polymer characteristics of the polymer pellets SSC23-IE are given in Table 2 below.

| **Table 2:** Polymer characteristics | | SSC23-IE |
|---|---|---|
| **Pellets** | | |
| MFR2 | g/10 min | 10.8 |
| C2 | wt.-% | 2.1 |
| 2,1 error | mol-% | 0.6 |
| XCS | wt.-% | 0.4 |
| $T_m$ | °C | 135.9 |
| $T_c$ | °C | 98.7 |

The polymer pellets of SSC23-IE (85 wt.-%) were dry-blended with 15 wt.-% propylene-based elastomer, before they were processed to 50 μm cast films as described above (Film sample preparation)

**Comparative Example CE1**

For the polymerization of the random copolymer CE1 (comparative) a phthalate-free Ziegler Natta catalyzed prepared as described in the example section of WO 2020/064673 A1 as "Reference Catalyst" was used.

The polymerization for preparing the random copolymer of propylene with ethylene comonomer for CE1 performed in a Borstar® pilot plant with a 2-reactor set-up (loop - gas phase reactor (GPR 1)) preceded by a prepolymerization reactor. (see Table 3)

**Table 3: Polymerization of ZNC3C2 for CE1**

| Prepolymerization: | |
|---|---|
| Temperature [°C] | 20 |
| TEAL [g/t $C_3$] | 170 |
| Donor [g/t $C_3$] | 40 |

(continued)

| | |
|---|---|
| Prepolymerization: | |
| Donor type | D |
| Residence time [h] | 0.2 |
| Loop: | |
| Temperature [°C] | 70 |
| Pressure [bar] | 5258 |
| Feed ratio $H_2/C_3$ [mol/kmol] | 0.40 |
| Feed ratio $C_2/C_3$ [mol/kmol] | 8.5 |
| Split [wt.-%] | 36 |
| Residence time [h] | 0.4 |
| $C_2$ content [wt.-%] | 3.6 |
| $MFR_2$ [g/10 min] | 2.0 |
| GPR1: | |
| Temperature [°C] | 80 |
| Pressure [bar] | 2500 |
| Feed $H_2/C_3$ [mol/kmol] | 7.7 |
| Feed $C_2/C_3$ [mol/kmol] | 33.8 |
| Split [wt.-%] | 64 |
| Residence time [h] | 1.8 |
| $C_2$ content [wt.-%] | 4.3 |
| Resulting base resin | |
| $C_2$ content [wt.-%] | 4.3 |
| 2,1 regio defects [mol-%] | 0 |
| $T_m$ [°C] | 140 |
| XCS [wt.-%] | 7.9 |
| $MFR_2$ [g/10 min] | 1.8 |

After polymerization the melt flow rate of the random copolymer was modified by vis-breaking to a final melt flow rate $MFR_2$ of 8.0 g/10 min during a compounding step in a twin extruder. During said compounding step additives as described below were added.

1000 ppm Irganox B215 (a 1:2-mixture of Pentaerythrityl-tetrakis(3-(3',5'-di-tert. butyl-4-hydroxyphenyl)-propionate, CAS-no. 6683-19-8, and Tris (2,4-di-t-butylphenyl) phosphite, CAS-no. 31570-04-4, commercially available from BASF SE, Germany) and 150 ppm magnesium oxide (CAS-no. 1309-48-4) as acid scavenger were added during the compounding step.

The polymer pellets of ZNC3C2-CE1 (85 wt.-%) were dry-blended with 15 wt.-% propylene-based elastomer, before they were processed to 50 μm cast films as described above (Film sample preparation)

*Materials used as elastomer:*

For IE1 and CE1:

**TAFMER™ PN-3560,** a propylene/ethylene/1-butene terpolymer elastomer, commercially available from Mitsui. It is characterized by a density (ISO 1183-1) of 866 kg/$m^3$, an $MFR_2$ (230°C, 2.16 kg; ISO 1133), of 6 g/10 min, a melting point $T_m$ (DSC ISO 11357) of 161°C, glass transition point $T_g$ of -21.2°C, an XCS content of 84.9 wt.-%, a C2 content of 6.8 wt.-%, and a C4 content of 18.8 wt.-%.

The films were tested and their recipe and properties are summarized in Table 4 below.

| **Table 4:** cast film properties | | **CE1** | **IE1** |
|---|---|---|---|
| **Recipe** | | | |
| SSC23-IE | wt.-% | - | 85 |
| ZNC2C3 | wt.-% | 85 | |
| TAFMER PN-3560 | wt.-% | 15 | 15 |
| | | | |
| **50 microns monolayer cast film** | | | |
| Sealing initiation temperature (SIT) | °C | 112 | 102 |
| Hot tack force | N | 2.33 | 3.68 |
| Clarity | % | 99.9 | 100 |
| Haze | % | 0.61 | 0.63 |

The films of IE1 and CE1 were furthermore steam sterilized as described above. Clarity after sterilization (a.s.) can be seen in Table 5.

**Table 5 -** Clarity after sterilization (a.s.)

| | | **IE1** | **CE1** |
|---|---|---|---|
| Clarity (a.s.) | [%] | 98.6 | 36.6 |

As can be seen from the above, with the suitable polymer design in combination with a low amount of propylene-based elastomer according to the polymer composition of the present invention, allows for a reduction in SIT in comparison to CE1 (base polymer ZNC2C3), thus enables a mono-polymer design targeting DfR. In addition hot tack is improved for IE1.

The polymer composition according to the present invention is furthermore more thermostable and thus more suitable for being sterilized. As can be seen clarity after sterilization is much better for IE1 than for CE1.

## Claims

**1.** A monolayer cast film made of a polypropylene-based composition (PC) comprising, based on the total weight of the PC,

a) 60.0 to 95.0 wt.-% of a single site catalysed propylene-ethylene copolymer base resin (SSC23) having

- an ethylene (C2) content, according to quantitative $^{13}$C-nuclear magnetic resonance (NMR) spectroscopy as described in the experimental section, in the range of 0.5 to 3.5 wt.-% with respect the total weight of the SSC23;
- a melt flow rate $MFR_2$, according to ISO 1133 at 230°C and 2.16 kg load, in the range of 0.5 to 50.0 g/10min;
- a xylene cold solubles (XCS) content, according to ISO 16152 at 25°C, in the range of 0.1 to 3.0 wt.-%, based on the total weight of the SSC23;
- a melting temperature ($T_m$), according to DSC as described in the experimental section, in the range of 115.0 to 145.0°C;
- a crystallization temperature ($T_c$), according to DSC as described in the experimental section, in the range of 80.0 to 115.0°C and
- a number of 2,1 regio-defects measured by quantitative $^{13}$C-nuclear magnetic resonance (NMR) spectroscopy as described in the experimental section, in the range of 0.05 to 1.2 mol-% and

b) 5.0 to 40 wt.-%, based on the total weight of the PC, of an propylene-based elastomer being a terpolymer of propylene, ethylene and 1-butene having

- a density according to ISO 1183-1 in the range of 850 to 910 kg/$m^3$;

- a $MFR_2$, measured at 230°C and a load of 2.16 kg according to ISO 1133 in the range of 0.1 to 80.0 g/10 min;
- a melting point ($T_m$), according to DSC as described in the experimental section in the range of 150 to 170°C;
- a xylene cold soluble (XCS) content, determined according to ISO 16152 at a temperature of 25°C, in the range of 70.0 to 100.0 wt.-%, based on the total weight of the propylene-based elastomer;
- a 1-butene content, measured by quantitative $^{13}C$-nuclear magnetic resonance (NMR) spectroscopy as described in the experimental section in the range of 5.0 to 30.0 wt.-%, based on the total weight of the propylene-elastomer and

an ethylene content, measured by quantitative $^{13}C$-nuclear magnetic resonance (NMR) spectroscopy as described in the experimental section in the range of 1.0 to 10.0 wt.-%, based on the total weight of the propylene-based elastomer.

**2.** The monolayer cast film according to claim 1, wherein the SSC23 has at least one, preferably two or more or all of

- an ethylene (C2) content, according to quantitative $^{13}C$-nuclear magnetic resonance (NMR) spectroscopy as described in the experimental section, in the range of 0.8 to 3.0 wt.-%, preferably 1.0 to 2.5 wt.-%, with respect the total weight of the SSC23;
- a melt flow rate $MFR_2$, according to ISO 1133 at 230°C and 2.16 kg load, in the range of 1.0 to 30.0 g/10min, preferably 2.0 to 20.0 g/10min, more preferably 5.0 to 15.0 g/10 min;
- a xylene cold solubles (XCS) content, according to ISO 16152 at 25°C, in the range of 0.10 to 2.0 wt.-%, preferably 0.20 to 1.0 wt.-%, based on the total weight of the SSC23;
- a melting temperature ($T_m$), according to DSC as described in the experimental section, in the range of 120.0 to 142.0°C, preferably 125.0 to 140.0°C;
- a crystallization temperature ($T_c$), according to DSC as described in the experimental section, in the range of 85.0 to 110.0°C, preferably 90.0 to 105.0°C;
- a number of 2,1 regio-defects measured by quantitative $^{13}C$-nuclear magnetic resonance (NMR) spectroscopy as described in the experimental section, in the range of 0.10 to 1.0 mol-%, preferably 0.20 to 0.80 mol-%.

**3.** The monolayer cast film according to any one of claims 1 to 2, wherein the SSC23 comprises, or consists of, two polymer fractions (SSC23-1) and (SSC23-2), wherein the fraction SSC23-1 is present in an amount of 52.0 to 80.0 wt.-%, preferably 55.0 to 75.0 wt.-% and more preferably 58.0 to 70.0 wt.-%, based on the total weight of the SSC23, and the fraction SSC23-2 is present in an amount of 20.0 to 48.0 wt.-%, preferably 25.0 to 45.0 wt.-% and more preferably 30.0 to 42.0 wt.-%, based on the total weight of the SSC23.

**4.** The monolayer cast film according to claim 3, wherein the fraction SSC23-1 has a melt flow rate $MFR_2$, according to ISO 1133 at 230°C and 2.16 kg load, in the range of 1.0 to 5.0 g/10 min, preferably 1.5 to 4.5 g/10 min and more preferably 2.0 to 4.0 g/10 min, and the fraction SSC23-2 has a melt flow rate $MFR_2$, according to ISO 1133 at 230°C and 2.16 kg load, in the range of 0.1 to 3.0 g/10 min, preferably 0.2 to 2.0 g/10 min and more preferably 0.3 to 1.5 g/10 min, wherein $MFR_2$ of fraction SSC23-1 is preferably higher than the $MFR_2$ of fraction SSC23-2.

**5.** The monolayer cast film according to any one of claims 1 to 4, wherein the polypropylene-based composition (PC) comprises, based on the total weight of the PC, 70.0 to 95.0 wt.-%, preferably 80.0 to 93.0 wt.-%, of the SSC23 and 5.0 to 30.0 wt.-%, preferably 7.0 to 20.0 wt.-% of the propylene-based elastomer.

**6.** The monolayer cast film according to any one of claims 1 to 5, wherein the propylene-based elastomer has a density, according to ISO 1183-1, in the range of 855.0 to 900.0 kg/$m^3$, preferably 860.0 to 890.0 kg/$m^3$ and
a melt flow rate $MFR_2$, according to ISO 1133 at 230°C and 2.16 kg load, in the range of 0.50 to 50.0 g/10min, preferably 1.0 to 20.0 g/10min and more preferably 2.0 to 10.0 g/10 min.

**7.** The monolayer cast film according to any one of claims 1 to 6, wherein the propylene-based elastomer has at least one, preferably two or more or all of

- a melting temperature $T_m$, according to DSC as described in the experimental section, in the range of 153.0 to 168.0°C and preferably 155.0 to 165.0°C,
- a xylene cold soluble (XCS) content, determined according to ISO 16152 at a temperature of 25°C, in the range of 80.0 to 100.0 wt.-% based on the elastomer;
- a 1-butene content, measured by quantitative $^{13}C$-nuclear magnetic resonance (NMR) spectroscopy as described in the experimental section, is in the range of 6.0 to 25.0 wt.-%, more preferably 10.0 to 22.0 wt.-

%, based on the total weight of the propylene-based elastomer,

• an ethylene content, measured quantitative $^{13}C$-nuclear magnetic resonance (NMR) spectroscopy as described in the experimental section in the range of 2.0 to 10.0 wt.-%, more preferably 3.5 to 8.0 wt.-%, based on the total weight of the propylene-based elastomer

• a glass transition temperature determined by dynamic mechanical analysis according to ISO 6721 below -5°C, more preferably in the range of -35 to below -5°C, still preferably in the range of -30 to -10°C.

**8.** The monolayer cast film according to any one of claims 1 to 7, wherein the single site catalysed propylene-ethylene copolymer base resin (SSC23) is produced in the presence of a single site metallocene complex of formula (la):

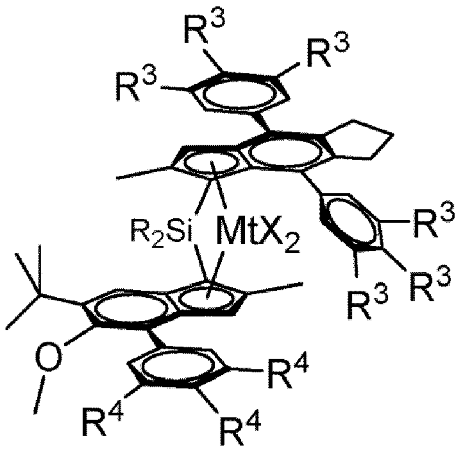

(la)

Wherein each $R^3$ and $R^4$ is independently the same or can be different and is hydrogen or a linear or branched $C_{1-6}$ alkyl group, wherein at least one $R^3$ per phenyl group and at least one $R^4$ is not hydrogen

R is a $C_{1-10}$ hydrocarbyl group, preferably a $C_{1-4}$ hydrocarbyl group and more preferably a methyl group and X independently is a hydrogen atom, a halogen atom, a $C_{1-6}$ alkoxy group, a $C_{1-6}$ alkyl group, a phenyl group or a benzyl group and preferably chlorine, a benzyl group or a methyl group,

wherein the metallocene complex is preferably rac-anti-dimethylsilanediyl[2-methyl-4,8-bis-(4'-tert-butylphenyl)-1,5,6,7-tetrahydro-s-indacen-1-yl][2-methyl-4-(3',5'-dimethylphenyl)-5-methoxy-6-tert-butylinden-1-yl] zirconium dichloride, or

rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-tert-butylinden-1-yl] zirconium dichloride, or

rac-anti-dimethylsilanediyl[2-methyl-4,8-bis-(3',5'-dimethylphenyl)-1,5,6,7-tetrahydro-s-indacen-1-yl][2-methyl-4-(3',5'-di-tert-butylphenyl)-5-methoxy-6-tert-butylinden-1-yl] zirconium dichloride,

or their corresponding zirconium dimethyl analogues, and

wherein the metallocene complex is more preferably rac-anti-dimethylsilanediyl[2-methyl-4,8-bis-(3',5'-dimethylphenyl)-1,5,6,7-tetrahydro-s-indacen-1-yl][2-methyl-4-(3',5'-dimethylphenyl)-5-methoxy-6-tert-butylinden-1-yl] zirconium dichloride.

**9.** The monolayer cast film according to any one of claims 1 to 8, wherein the film has a sealing initiation temperature SIT, determined on a 50 μm cast film as described in the experimental section, of less than 110°C, preferably in the range of 80 to 108°C, more preferably 90 to 116°C.

**10.** The monolayer cast film according to any one of claims 1 to 9, wherein the film has a sealing window, determined as the difference of the melting temperature $T_m$ of the SSC23 and the SIT of the PC, of at least 20.0°C, preferably 20.0 to 50.0°C, more preferably 25.0 to 45.0°C and even more preferably 30.0 to 40.0°C.

**11.** The monolayer cast film according to any one of claims 1 to 10, wherein the film has a haze, determined on a 50 μm cast film according to ASTM D1003-13, of less than 1.0%, more preferably in the range of 0.10 to 0.80%, even more preferably 0.20 to 0.60% and most preferably 0.25 to 0.50%.

**12.** The monolayer cast film according to any one of claims 1 to 11, wherein the film has a clarity, determined on a 50 μm

cast film according to ASTM D1003-13, of at least 98.0%, more preferably in the range of 99.0 to 100.0%, and most preferably in the range of 99.5 to 100.0%.

**13.** The monolayer cast film according to any one of claims 1 to 12, wherein the film has a clarity, determined on a 50 μm cast film according to ASTM D1003-13 after sterilization (steam sterilization at 121°C for 30 min as described in the experimental section) of at least 97.0%, more preferably in the range of 97.5 to 100.0%, and most preferably in the range of 98.0 to 100.0%.

**14.** Use of a polypropylene-based composition (PC) comprising, based on the total weight of the PC,

a) 60.0 to 95.0 wt.-% of
a single site catalysed propylene-ethylene copolymer base resin (SSC23) having

- an ethylene (C2) content, according quantitative $^{13}C$-nuclear magnetic resonance (NMR) spectroscopy, as described in the experimental section, in the range of 0.5 to 3.5 wt.-% with respect the total weight of the SSC23;
- a melt flow rate $MFR_2$, according to ISO 1133 at 230°C and 2.16 kg load, in the range of 0.5 to 50.0 g/10min;
- a xylene cold solubles (XCS) content, according to ISO 16152 at 25°C, in the range of 0.1 to 3.0 wt.-%, based on the total weight of the SSC23;
- a melting temperature ($T_m$), according to DSC as described in the experimental section, in the range of 115.0 to 145.0°C;
- a crystallization temperature ($T_c$), according to DSC as described in the experimental section, in the range of 80.0 to 115.0°C and
- a number of 2,1 regio-defects measured by quantitative $^{13}C$-nuclear magnetic resonance (NMR) spectroscopy, as described in the experimental section, in the range of 0.05 to 1.2 mol-% and

b) 5.0 to 40 wt.-%, based on the total weight of the PC, of an elastomer being a terpolymer of propylene, ethylene and 1-butene having

- a density according to ISO 1183-1 in the range of 850 to 910 kg/m$^3$;
- a $MFR_2$, measured at 230°C and a load of 2.16 kg according to ISO 1133 in the range of 0.1 to 80.0 g/10 min;
- a melting point ($T_m$), according to DSC as described in the experimental section in the range of 150 to 170°C;
- a xylene cold soluble (XCS) content, determined according to ISO 16152 at a temperature of 25°C, in the range of 70.0 to 100.0 wt.-%, based on the total weight of the propylene-based elastomer;
- a 1-butene content, measured by quantitative $^{13}C$-nuclear magnetic resonance (NMR) spectroscopy, as described in the experimental section in the range of 5.0 to 30.0 wt.-%, based on the total weight of the propylene-based elastomer and
- an ethylene content, measured by quantitative $^{13}C$-nuclear magnetic resonance (NMR) spectroscopy, as described in the experimental section in the range of 1.0 to 10.0 wt.-%, based on the total weight of the elastomer.

to produce a monolayer cast film or a layer of a multilayer film.

**15.** Use according to claim 14, wherein the polypropylene-based composition (PC) is the polypropylene-based composition (PC) as defined in any one of claims 2 to 8.

Europäisches Patentamt
European Patent Office
Office européen des brevets

# EUROPEAN SEARCH REPORT

Application Number
EP 24 19 3656

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/110737 A1 (BOREALIS AG [AT]) 22 June 2023 (2023-06-22)<br>* example IE2; tables 1-3 *<br>* claims 1,5,15 *<br>* page 33 *<br>----- | 1-15 | INV.<br>C08L23/14<br>C08F210/06<br>B32B27/32<br><br>ADD.<br>C08F210/08<br>C08F210/16<br>C08F4/6592 |
| A | WO 2012/058789 A1 (EXXONMOBIL CHEM PATENTS INC [US]; CHEN XIN [CN]; HARDY PHILIPPE [BE]) 10 May 2012 (2012-05-10)<br>* page 38, table 3, skin 1 (inner), examples 1-2 *<br>* table 2 *<br>* paragraphs [0007], [0079] *<br>* claims 1,6,7,25 *<br>----- | 1-15 | |
| A | EP 3 670 547 A1 (BOREALIS AG [AT]) 24 June 2020 (2020-06-24)<br>* examples IE4, IE5; tables 1-3 *<br>* claims 1,8,9,13,14 *<br>* paragraphs [0001], [0002], [0007], [0008], [0010], [0013] *<br>----- | 1-15 | TECHNICAL FIELDS SEARCHED (IPC)<br><br>C08L<br>C08F<br>B32B |

The present search report has been drawn up for all claims

| Place of search | Date of completion of the search | Examiner |
|---|---|---|
| Munich | 4 February 2025 | Gamb, Véronique |

2

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

## ANNEX TO THE EUROPEAN SEARCH REPORT ON EUROPEAN PATENT APPLICATION NO. EP 24 19 3656

This annex lists the patent family members relating to the patent documents cited in the above-mentioned European search report. The members are as contained in the European Patent Office EDP file on
The European Patent Office is in no way liable for these particulars which are merely given for the purpose of information.

04-02-2025

| Patent document cited in search report | Publication date | Patent family member(s) | Publication date |
|---|---|---|---|
| WO 2023110737 A1 | 22-06-2023 | CN 118382669 A | 23-07-2024 |
| | | EP 4194503 A1 | 14-06-2023 |
| | | ES 2977502 T3 | 26-08-2024 |
| | | WO 2023110737 A1 | 22-06-2023 |
| WO 2012058789 A1 | 10-05-2012 | CN 103189207 A | 03-07-2013 |
| | | EP 2635437 A1 | 11-09-2013 |
| | | US 2014147646 A1 | 29-05-2014 |
| | | WO 2012058789 A1 | 10-05-2012 |
| EP 3670547 A1 | 24-06-2020 | CN 113195557 A | 30-07-2021 |
| | | EP 3670547 A1 | 24-06-2020 |
| | | US 2022017734 A1 | 20-01-2022 |
| | | WO 2020126516 A1 | 25-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1358252 B1
- WO 2020239561 A1
- EP 3280768 A1
- EP 3064548 A1
- WO 2016198273 A1
- WO 2020239603 A1
- WO 2021009189 A1
- WO 2021009190 A1
- WO 2021009191 A1
- WO 2021009192 A1
- WO 2019179959 A1
- WO 2017148970 A1
- WO 2020064673 A1


### Non-patent literature cited in the description


- **L. RESCONI** ; **L. CAVALLO** ; **A. FAIT** ; **F. PIEMONTESI**. *Chem. Rev.*, 2000, vol. 100 (4), 1253
- **CHENG, H. N.** *Macromolecules*, 1984, vol. 17, 1950
- **W-J. WANG** ; **S. ZHU**. *Macromolecules*, 2000, vol. 33, 1157
- **POLLARD, M.** ; **KLIMKE, K.** ; **GRAF, R.** ; **SPIESS, H.W** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, vol. 200745 (S1), S198
- **CASTIGNOLLES, P.** ; **GRAF, R.** ; **PARKINSON, M.** ; **WILHELM, M.** ; **GABORIEAU, M.** *Polymer*, vol. 50 (2009), 2373
- **RESCONI, L.** ; **CAVALLO, L.** ; **FAIT, A.** ; **PIEMONTESI, F.** *Chem. Rev.*, 2000, vol. 100, 1253
- **A.J. BRANDOLINI** ; **D.D. HILLS**. NMR spectra of polymers and polymer additives. Marcel Deker Inc, 2000